# FASCICULE DE BREVET EUROPEEN

(11) **EP 1 102 379 B1**
(45) Date de publication et mention de la délivrance du brevet: **25.05.2011**
(21) Numéro de dépôt: 00403172.0
(22) Date de dépôt: 14.11.2000
(51) Int. Cl.: H02H 7/04, H01H 35/18, H01H 35/24

(54) **Système de protection d'un transformateur de distribution triphasé à isolation dans un diélectrique liquide comportant un micro-sectionneur**
Schutzsystem für einen Dreiphasenverteiltransformator mit einer durch ein dielektrisches Fluidum unterstützten Isolierung mit einem Mikroschalter
Protection for a three-phase distribution transformer immersed in a dielectric fluid comprising a microswitch

(30) Priorité: 17.11.1999 FR 9914452
(43) Date de publication de la demande: 23.05.2001
(73) Titulaire: AREVA T&D SAS, 92084 Paris La Défense Cedex (FR)
(72) Inventeur: Folliot, Philippe, 76350 Oissel (FR); Melquiond, Stéphane, 34400 Lunel (FR)
(74) Mandataire: Poulin, Gérard

(56) Documents cités:
- EP-A- 0 800 251

## Description

L'invention porte sur un système de protection d'un transformateur de distribution à isolation dans un diélectrique liquide.

Plus particulièrement, l'invention s'applique aux transformateurs de distribution situés dans des réseaux à régime de neutre compensé, c'est-à-dire dans lequel le point neutre du secondaire, monté en étoile, du transformateur du poste source est relié à la terre par l'intermédiaire d'une réactance L accordée aux capacités du réseau, de telle sorte qu'en présence d'un défaut à la terre, le courant dans le défaut est théoriquement proche de zéro.

Dans les transformateurs de distribution à diélectrique liquide, en cas de défaut, il y a un risque d'échauffement du diélectrique provoquant une surpression pouvant atteindre une valeur telle qu'il explose avec les graves conséquences pour l'environnement dues aux projections du diélectrique.

Le brevet français FR 2629955 décrit un dispositif de protection d'un transformateur triphasé immergé dans un diélectrique liquide contre un défaut consistant en une baisse du niveau du liquide diélectrique à une valeur déterminée.

Le dispositif consiste en ce que chaque phase, côté haute tension, est équipée d'un fusible de limitation d'intensité et en ce qu'un flotteur vient, en cas de baisse de niveau du liquide diélectrique, établir un court-circuit franc entre un point de chaque phase situé entre les fusibles et les enroulements du transformateur, et un quatrième contact relié à la masse du transformateur.

Cependant, avec un réseau à régime de neutre compensé, comme dit plus haut, un tel dispositif n'est pas satisfaisant. En effet, en cas d'apparition du défaut (baisse du niveau à une hauteur telle que le flotteur établit le contact entre les quatre points), on pourra avoir un court-circuit triphasé relié à la terre par l'intermédiaire du contact à la masse et seuls deux fusibles couperont et le courant passera entre la troisième phase non coupée et la terre avec une intensité trop faible, compte tenu du régime de neutre compensé, pour faire fonctionner le troisième fusible mais suffisamment importante pour provoquer, soit un échauffement du diélectrique liquide, faire monter la pression et exploser la cuve, soit un déclenchement du poste source.

La demande de brevet français FR 2747245 décrit un système plus sûr et fonctionnant parfaitement dans un réseau à régime de neutre compensé ou non. Dans ce système de protection d'un transformateur de distribution triphasé immergé dans un diélectrique liquide contenu dans une cuve, deux des trois phases sont équipées chacune du côté haute tension du transformateur d'un fusible limiteur de courant et d'un micro-fusible de protection disposé en série avec le fusible limiteur de courant, ledit micro-fusible étant plus rapide que ledit fusible limiteur de courant et étant associé à un percuteur. Ce système comporte en outre au moins un moyen de détection de défaut concernant au moins l'un des points suivants : la pression dans la cuve et le niveau du diélectrique, un court-circuiteur triphasé situé sur la haute tension entre lesdits fusibles limiteurs de courant et les enroulements haute tension, ledit court-circuiteur étant commandé par ledit moyen de détection de défaut, le percuteur associé à chaque micro-fusible commandant également le court-circuiteur en cas de fonctionnement du micro-fusible.

Bien que ce système soit sûr, on peut imaginer un enchaînement de circonstances qui rendrait possible le maintien à la masse d'un point des enroulements du primaire du transformateur.

Le but de l'invention est donc de perfectionner ce système de protection à moindre coût pour remédier à l'inconvénient évoqué ci-dessus.

Selon l'invention, la troisième phase est équipée du côté haute tension du transformateur et en amont du court-circuiteur d'un micro-sectionneur tel que défini à la revendication 1.

Un tel micro-sectionneur à isolation dans le diélectrique liquide est peu encombrant, de l'ordre d'une dizaine de centimètres et est moins coûteux qu'un fusible limiteur de courant tout en assurant une capacité d'isolement comparable mais qui est bien supérieure à celle d'un micro-fusible. En outre, un tel micro-sectionneur peut facilement être conçu pour fondre plus rapidement qu'un fusible limiteur de courant moyenne tension de façon à fonctionner pour des défauts de tension simple phase-terre.

Selon un mode de réalisation particulier du système de protection selon l'invention, le micro-sectionneur comporte une lame fusible dont les deux extrémitées sont éloignées l'une de l'autre sous l'action d'une force de rappel exercée par un élement élastique lorsque la lame a fondu.

Pour renforcer encore la protection apportée par ce système, notamment en cas de fuite de la cuve remplie du diélectrique liquide, on prévoit de disposer ledit micro-sectionneur dans une enceinte hermétique remplie dudit diélectrique liquide et de coiffer les têtes des fusibles limiteurs de courant d'un capot rempli du diélectrique liquide.

Un exemple de réalisation du système de protection selon l'invention est décrit ci-après et illustré sur les dessins.
La figure 1 montre très schématiquement le système de protection selon l'invention.
La figure 2 illustre un exemple de réalisation d'un micro-sectionneur équipant le système de protection selon l'invention.
La figure 3 illustre le capotage des têtes des fusibles limiteur de courant.

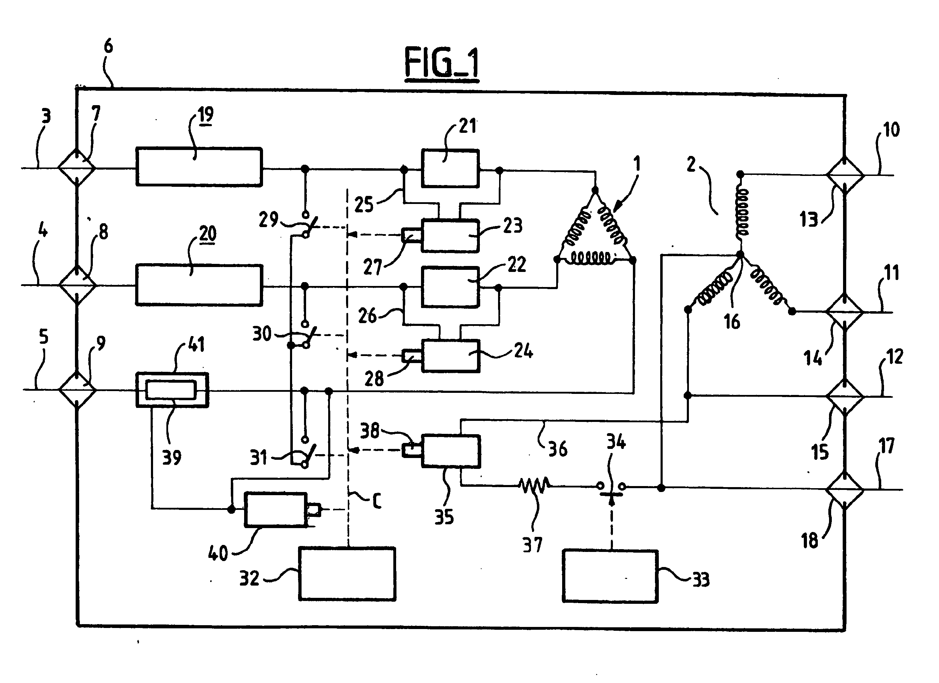

Le transformateur illustré sur la figure 1 est par exemple un transformateur 20/0,410 kvolts.

On a figuré en 1 l'enroulement haute tension en triangle et en 2 l'enroulement basse tension en étoile. L'enroulement haute tension 1 est alimenté par les trois phases 3,4 et 5 qui pénètrent dans la cuve du transformateur, schématiquement représentée par un rectangle 6, par des traversées isolantes 7,8 et 9.

L'enroulement basse tension 2 alimente les lignes de phases 10,11 et 12 en traversant la cuve 6 par des traversées isolantes 13,14 et 15 et de même, le point neutre 16 est relié à un conducteur neutre 17 traversant la cuve par une traversée isolante 16.

Côté haute tension, deux des trois phases, ici les phases repérées 3 et 4 sont reliées à l'enroulement haute tension 1 par l'intermédiaire d'un fusible limiteur de courant respectivement 19 et 20.

Ces fusibles fonctionnent normalement au-dessus d'une valeur d'intensité qu'on appellera intensité de coupure lc, par exemple de 60 ampères. Au-dessous de cette valeur, il existe une zone d'intensité critique pour laquelle le fusible s'échauffe, se dégrade et coupe mal, par exemple entre 36 et 60 ampères. Afin de protéger ces fusibles contre un mauvais fonctionnement dans cette zone d'intensité critique, chaque fusible limiteur de courant 19,20 est associé en série à un micro-fusible, respectivement 21 et 22 plus rapide que le fusible limiteur de courant et constitué par une courte lame d'argent encochée. Son rôle est d'obtenir une fusion en fond d'encoche pour de faibles courants de défaut, dans la zone d'intensité critique du fusible limiteur de courant, avec une bonne précision. Chaque micro-fusible est associé à un percuteur respectivement 23 et 24.

Un tel percuteur est connu en soi ; il est constitué d'un doigt poussé par un ressort maintenu bandé par un fil d'acier. Le fil d'acier, figuré en 25 et 26, est branché en parallèle sur le micro-fusible 21,22. Le fil d'acier du percuteur a une résistance électrique beaucoup plus élevée que celle de la lame d'argent du micro-fusible, de telle sorte qu'en fonctionnement normal, le courant passe dans la lame d'argent évitant le vieillissement du fil d'acier. En cas de surintensité, dans la zone calibrée correspondant à la zone critique, la lame d'argent fond, d'où l'apparition d'un arc électrique augmentant la tension aux bornes du micro-fusible et déviant le courant vers le fil d'acier qui fond lui aussi libérant le doigt 27,28 du percuteur. C'est le fonctionnement classique d'un fusible à percuteur.

La libération du doigt d'un percuteur commande la fermeture d'un court-circuiteur triphasé 29,30,31. Cette commande C est assurée par l'intermédiaire d'un système mécanique de déclenchement quelconque et est figurée par le tracé en traits discontinus. Le système comporte en outre un détecteur de pression 32 qui commande également le court-circuiteur 29,30,31 en cas de pression du liquide diélectrique dépassant la valeur de réglage du capteur. Un détecteur de niveau 33 complète également le dispositif de protection.

En cas de baisse de niveau du liquide diélectrique au-dessous d'une valeur donnée, le détecteur 33, constitué par exemple par un simple flotteur, effectue la fermeture d'un contact 34 fermant un circuit comprenant un percuteur 35 dont le fil d'acier 36 est branché en parallèle entre le point neutre 16 et une phase 12. Une résistance de limitation 37 est insérée dans le circuit si nécessaire. La fermeture du contact 34 fait circuler dans ce circuit un courant qui fait fondre le fil d'acier 36 du percuteur 35 libérant son doigt 38 et provoquant la fermeture du court-circuiteur 29,30,31.

Ainsi en cas d'apparition d'un défaut, tel qu'une surintensité, une surpression ou une fuite de la cuve entraînant une baisse de niveau du liquide diélectrique d'une valeur déterminée, on provoque un court-circuit franc entre les trois phases haute tension 3,4 et 5 en un point situé entre les fusibles 19,20 et l'enroulement haute tension 1, ce qui provoque immédiatement la coupure des fusibles 19 et 20.

Les micro-fusibles 21 et 22 n'ont pas de pouvoir de coupure et ne servent qu'à transformer une surintensité en action mécanique, par le percuteur 23,24 afin d'assurer la fermeture du court-circuiteur 29,30,31 pour faire fonctionner les fusibles 19,20 qui ont, eux un pouvoir de coupure.

A la différence de la construction connue de la demande de brevet français FR 2747245, la troisième phase 5 est reliée à l'enroulement haute tension 1 par l'intermédiaire d'un micro-sectionneur 39 disposé en amont du court-circuiteur 29,30,31 et associé à un percuteur 40 commandant le court-circuiteur en cas de fonctionnement du micro-sectionneur de la même façon que les percuteurs 23,24.

Ce micro-sectionneur 39 a une lame d'argent encochée calibrée pour couper des courants de défaut entre la phase 5 et la cuve 6 mise à la terre et est agencé pour procurer une distance d'isolement suffisamment grande évitant des réamorçages du défaut. Ces courants sont typiquement dans la zone d'intensité critique évoquée plus haut.

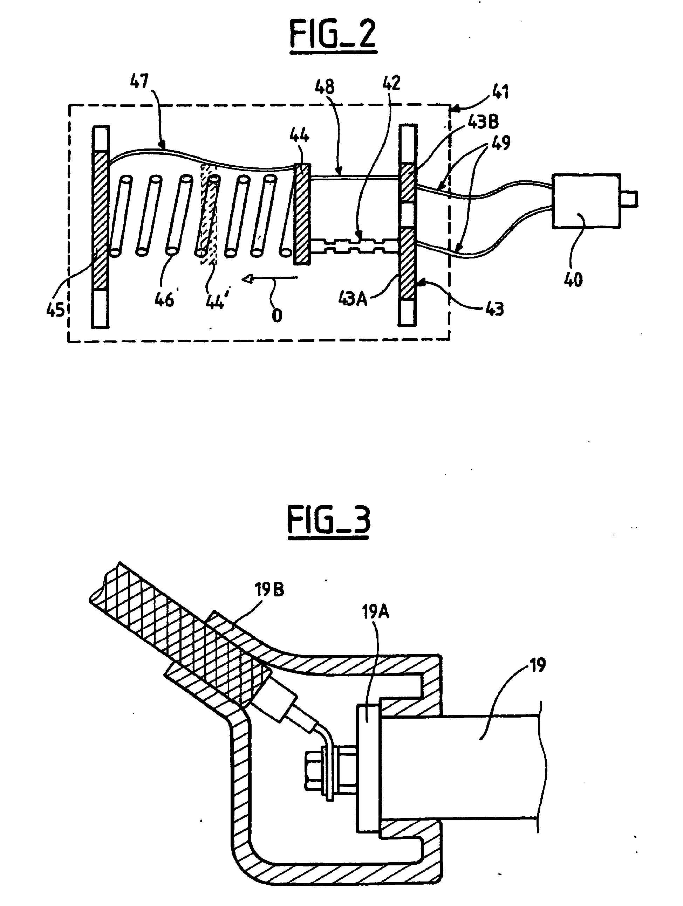

La figure 2 illustre un exemple de construction du micro-sectionneur 39. Celui-ci est disposé dans une enceinte hermétique de rétention du diélectrique liquide figurée par le rectangle 41, qui est elle-même disposée dans la cuve 6. Cette enceinte 41 sert à assurer une tenue diélectrique suffisante entre les deux bornes d'entrée et de sortie du micro-sectionneur si le niveau de liquide diélectrique dans la cuve 6 arrive à un point tel à découvrir les parties sous tension du système de protection.

Le micro-sectionneur 39 comprend donc une lame fusible encochée 42 disposée entre une borne fixe conductrice de sortie 43 et une borne intermédiaire conductrice mobile 44, une borne fixe d'entrée conductrice 45 ainsi qu'un élément élastique 46, ici un ressort spiralé, disposé entre les bornes 44 et 45. L'élément élastique n'a pas de rôle de conducteur électrique, la conduction électrique entre les bornes 44 et 45 étant assurée par une tresse métallique souple 47. L'élément élastique 46 est contraint pour exercer une force de rappel tendant à rapprocher la borne mobile 44 de la borne fixe 45. Enfin un fil conducteur 48 est tendu entre les bornes 44 et 43 pour résister à la force de rappel exercée par l'élément élastique 46. Le fil d'acier maintenu bandé par le ressort du percuteur 40 est représenté par 48.

Sur la figure 2, on voit que ce fil 48 est branché en parallèle sur deux parties conductrices 43A et 43B de la borne 43 qui sont isolées l'une de l'autre. La lame 42 est branchée en série avec une première branche du fil 49 à travers la partie 43A conductrice de la borne 43 et le fil 48 est branché en série à la seconde branche du fil 49 à travers l'autre partie conductrice 43B de la borne 43. En outre, on prévoit que la résistance électrique de la lame 42 est inférieure à celle du fil 49 qui est inférieure à celle du fil 48 de telle sorte que la lame 42 fond avant le fil 49 qui fond avant le fil 48.

En l'absence d'un défaut phase-terre, le courant passe dans le micro-sectionneur 39 à travers la borne d'entrée 45, puis à travers la tresse 47, puis à travers la borne mobile 44, puis à travers la lame 42, puis à travers la partie 43A de la borne de sortie 43 qui est reliée à l'enroulement 1.

Le fonctionnement du système de protection avec le micro-sectionneur est le suivant dans le cas d'un défaut phase-terre.

La lame fusible 42 fond ; le courant passe alors de la borne 44 vers la partie 43B de la borne 43 à travers le fil 48 pour être dérivé dans le fil 49 du percuteur 40, la partie 43B n'étant pas reliée électriquement à l'enroulement 1. Le fil 49 du percuteur 40 fond à son tour ce qui libère le percuteur 40 qui commande la fermeture du court-circuiteur triphasé 29,30,31. Le fil 48 fond alors immédiatement ce qui libère la borne 44 qui est alors immédiatement éloignée de la borne 43 dans la direction indiquée par la flèche O sous l'action de la force de rappel exercée par l'élément élastique 46. La borne 44 occupe alors une position symbolisée sur la figure 2 par la référence 44' et les deux extrémités de la lame 42 fondue sont suffisament distantes pour couper l'arc électrique et garantir la tenue de la tension transitoire de rétablissement. Cette distance est typiquement de quelques centimètres pour un transformateur de 24 k volts du fait que la coupure du micro-sectionneur se fait dans le diélectrique liquide remplissant l'enceinte isolante 41. Le micro-sectionneur fonctionne de la même façon même si le diélectrique liquide dans la cuve 6 vient à découvrir les parties sous tension du système de protection.

Pour protéger encore plus le système contre les court-circuits phase-phase ou phase-terre en cas de baisse du liquide diélectrique dans la cuve 6, les têtes des fusibles limiteur de courant 19 et 20 sont chacune capotée par une enveloppe isolante remplie du diélectrique liquide. Sur la figure 3, on a représenté une tête 19A du fusible 19 ainsi que sa connectique qui est coiffée par un capot isolant 19B destiné à être rempli du liquide diélectrique. Le capot 19B peut être hermétique ou ouvert sur le dessus pour permettre son remplissage lors de la phase de remplissage de la cuve 6 mais dans ce cas il doit être disposé dans une position adéquate pour éviter sa vidange du liquide diélectrique en cas de fuite de la cuve 6.

## Revendications

1. Un système de protection d'un transformateur de distribution triphasé immergé dans un diélectrique liquide contenu dans une cuve (6), dans lequel deux (3,4) des trois phases sont équipées chacune du côté haute tension du transformateur d'un fusible limiteur de courant (19,20) disposé en série avec un micro-fusible (21,22) de protection, ledit micro-fusible étant plus rapide que ledit fusible limiteur de courant et étant associé à un percuteur (23,24), le système comportant en outre au moins un moyen (32,33) de détection de défaut concernant au moins l'un des points suivants : la pression dans la cuve et le niveau du diélectrique, un court-circuiteur triphasé (29,30,31) situé sur la haute tension entre les deux fusibles limiteurs de courant (19,20) et les enroulements haute tension (1) du transformateur, ledit court-circuiteur étant commandé par un moyen (32) de détection de défaut, le percuteur associé à chaque micro-fusible commandant également le court-circuiteur en cas de fonctionnement du micro-fusible, **caractérisé en ce que** la troisième phase est équipée du côté haute tension du transformateur et en amont du court-circuiteur d'un micro-sectionneur (39) associé à un percuteur (40) commandant le court-circuiteur en cas de fonctionnement du micro-sectionneur, le micro-sectionneur (39) fondant plus rapidement que les fusibles limiteurs de courant (19,20) de façon à fonctionner pour des defauts de tension simple example -terre et ayant une capacité disolement bien superieure à celle des micro-fusibles (21,22).

2. le sectionneur selon la revendication 1, dans lequel le micro-sectionneur (39) comporte une lame fusible (42) dont les deux extrémités sont éloignées l'une de l'autre sous l'action d'une force de rappel exercée par un élément élastique (46) quand la lame a fondu.

3. Le système selon la revendication 1 ou 2, dans lequel ledit micro-sectionneur (39) est disposé dans une enceinte hermétique (41) remplie dudit diélectrique liquide.

4. Le système selon l'une des revendications 1 à 3, dans lequel les têtes (19A) des fusibles limiteurs de courant (19,20) sont coiffées chacune par un capôt (19B) rempli du diélectrique liquide

## Claims

1. A system for protecting a three-phase distribution transformer immersed in a liquid dielectric contained in a tank (6), in which two (3, 4) of the three phases are fitted with respective current-limiting fuses (19, 20) and respective protective micro-fuses (21, 22) connected in series with the current-limiting fuses on the high voltage side of the transformer, said micro-fuses being faster than said current-limiting fuses and being associated with respective strikers (23, 24), the system further including at least one means (32, 33) for detecting a fault concerning at least one of the following points: the pressure in the tank and the level of the dielectric; a three-phase short-circuiter (29, 30, 31) situated on the high voltage side between said current-limiting fuses and the high voltage windings (1), said short-circuiter being operated by said fault detection means, the striker associated with each micro-fuse also causing the short-circuiter to be operated in the event of the micro-fuse operating, the system being **characterized in that** the third phase is fitted on the high voltage side of the transformer and upstream from the short-circuiter with a micro-disconnector (39) associated with a striker (40) causing the short-circuiter to operate in the event of the micro-disconnector operating, the micro-disconnector (39) melting more quickly than the current-limiting fuses (19, 20) so as to operate on voltage faults between a single phase and ground and having a isolating capacity much better than that of the micro-fuses (21, 22).

2. The system of claim 2, in which the micro-disconnector (39) comprises a fuse blade (42), and when the blade melts, its two ends are moved apart from each other under drive from a return force exerted by a resilient element (46).

3. The system of claim 1 or 2, in which said micro-disconnected (39) is placed in a hermetic enclosure (41) filled with said dielectric.

4. The system of claim 1 or 3, in which the heads (19A) of the current-limiting fuses (19, 20) are each covered by a respective cover (19B) filled with the liquid dielectric.

## Patentansprüche

1. Schutzsystem für einen Dreiphasenverteiltransformator, der in einer in einem Behälter (6) enthaltenen dielektrischen Flüssigkeit versenkt ist, wobei zwei (3, 4) der drei Phasen jeweils auf der Hochspannungsseite des Transformators mit einer strombegrenzenden Hochspannungssicherung (19, 20) versehen sind, die in Reihe mit einer schützenden Mikrosicherung (21, 22) geschaltet ist, wobei die Mikrosicherung schneller als die strombegrenzende Hochspannungssicherung ist und einer Schlagvorrichtung (23, 24) zugeordnet ist, wobei das System ferner zumindest ein Erfassungsmittel (32, 33) zum Erfassen von Fehlern hinsichtlich zumindest eines der nachfolgenden Parameter aufweist: Behälterdruck und Pegel der dielektrischen Flüssigkeit, sowie eine dreiphasige Kurzschlussvorrichtung (29,30,31), die hochspannungsseitig zwischen den beiden strombegrenzenden Hochspannungssicherungen (19, 20) und den Hochspannungswicklungen (1) des Transformators liegt, wobei die Kurzschlussvorrichtung über ein Fehlererfassungsmittel (32) betätigt wird, wobei die Schlagvorrichtung, der jeweils eine Mikrosicherung zugeordnet ist, bei Betrieb der Mikrosicherung auch die Kurzschlussvorrichtung betätigt, **dadurch gekennzeichnet, dass** die dritte Phase auf der Hochspannungsseite des Transformators und der Kurzschlussvorrichtung vorgelagert mit einen Mikrotrennschalter (39) versehen ist, der einer Schlagvorrichtung (40) zugeordnet ist, welche bei Betrieb des Mikrotrennschalters die Kurzschlussvorrichtung betätigt, wobei der Mikrotrennschalter (39) schneller schmilzt als die strombegrenzenden Sicherungen (19, 20), so dass er bei Einzeiphase-Erde-Spannungsfehfern einsetzt und ein Isoliervermögen hat, dass deutlich höher ist als das der Mikrosicherungen (21, 22).

2. Trennschalter nach Anspruch 1, wobei der Mikrotrennschalter (39) einen Schmelzstreifen (42) aufweist, von dem die beiden Enden unter Wirkung einer von einem Federelement (46) ausgeübten Rückstellkraft voneinander entfernt werden, wenn der Streifen geschmolzen ist.

3. System nach Anspruch 1 oder 2, wobei der Mikrotrennschalter (39) in einem hermetisch dichten Raum (41) angeordnet ist, der mit der dielektrischen Flüssigkeit gefüllt ist.

4. System nach einem der Ansprüche 1 bis 3, wobei die Köpfe (19A) der strombegrenzenden Sicherungen (19, 20) jeweils mit einer Kappe (19B) bedeckt sind, die mit der dielektrischen Flüssigkeit gefüllt ist.
